# EUROPEAN PATENT SPECIFICATION

(11) **EP 3 204 156 B1**
(45) Date of publication and mention of the grant of the patent: **02.12.2020**
(21) Application number: 15790452.5
(22) Date of filing: 08.10.2015
(51) Int. Cl.: B01J 35/10, B01J 35/00, B01J 37/02, B01J 21/06

(54) **METHOD TO PRODUCE A PHOTOCATALYTIC BITUMINOUS PRODUCT**
VERFAHREN ZUR HERSTELLUNG EINES FOTOKATALYTISCHEN BITUMINÖSEN PRODUKTS
PROCÉDÉ POUR PRODUIRE UN PRODUIT BITUMINEUX PHOTOCATALYTIQUE

(30) Priority: 10.10.2014 DK 201470630
(43) Date of publication of application: 16.08.2017
(73) Proprietor: Photocat A/S, 4000 Roskilde (DK)
(72) Inventor: HUMLE, Jonathan Michael Hetland, DK-2700 Brønshøj (DK)
(74) Representative: Plougmann Vingtoft a/s
(86) International application number: PCT/DK2015/050303
(87) International publication number: WO 2016/055074

(56) References cited:
- EP-A1- 2 055 857
- US-A1- 2010 190 633

## Description

### FIELD OF THE INVENTION

The present invention relates to a method to produce a photocatalytic bituminous product.

### BACKGROUND OF THE INVENTION

Air pollution and surface contamination as well as algae growth are major problems in buildings.

Photocatalytic compounds such as TiO₂ can be used to produce smart building materials that can reduce, e.g. the high level of pollutant that poses a threat to the human health in big cities.

A common strategy is to apply photocatalytic compounds to building surfaces that are irradiated by the sun light during the day. For example, roofs are surfaces that are exposed to sun light for several hours during the day.

For example, titanium dioxide powder may be mixed with cement and other binders materials to produce photocatalytic pavement.

US 2010/0190633 A1 discloses a coating composition. The coating composition comprises a dispersion of photocatalysts having a mean cluster size of less than about 300 nm and an alkali metal silicate binder. The same document also discloses a coated article. The coated article has a photocatalytic coating with improved transparency on its external surface that is formed from the aforesaid coating composition.

EP2055857 A1 a depolluting facing for a building structure, e.g. a roofing membrane, including a first and a second layer. The first layer acting as base for the at least second layer wherein the second layer consist of granules comprising NOx reducing anatase titanium dioxide. The first layer may constitute a bituminous membrane or a panel made up from plastic or metal. The granules may be fixed to the roofing membrane by pressing or calandering on the hot bituminous blend embedding the granules in the bituminous membrane. The granules can be made of anatase titanium dioxide and a mineral binder, for example silicate or phosphate.

One drawback of these materials is the large amount of titanium dioxide powder used. Titanium dioxide powder has to be mixed in large quantity so as to achieve acceptable activity towards the reduction of pollutants as not all the titanium dioxide powder is available for photocatalytic reactions.

Thus, an efficient method to produce photocatalytic materials that are exposed to sunlight for several hours per day, could be advantageous.

In particular, a method of producing photocatalytic materials that are exposed to sunlight for several hours per day, which employs low amount of catalytic materials and achieves high activity in degradation of pollutants, such as NOx, SO₂ or other Volatile Organic Compound (VOC), could be advantageous.

### OBJECT OF THE INVENTION

It may be seen as an object of the invention to provide a method to produce photocatalytic materials that are exposed to sunlight for several hours per day, such as roofing felt, having high activity towards degradation of air and water pollutants, reduction of algae growth and reduction of staining from bitumen staining.

It is an object of the present invention to wholly or partly overcome the above disadvantages and drawbacks of the prior art.

An object of the present invention is to provide an alternative to the prior art.

In particular, it may be seen also as an object of the present invention to provide a more efficient and low cost method of production of photocatalytic materials for roofing felt.

### SUMMARY OF THE INVENTION

The invention is the method defined in the appended claims. Thus, the above described object and several other objects are intended to be obtained in a first aspect of the invention by providing a method of producing a photocatalytic bituminous product, the method comprising: impregnating a sheet with an organic layer; coating said organic layer with an inorganic layer, wherein the coating comprises sprinkling said organic layer with mineral granulates, and thereafter further coating said organic layer with mineral granulates by depositing photocatalytic titanium dioxide nanoparticles onto said organic layer with mineral granulates thereby depositing photocatalytic titanium dioxide nanoparticles onto the sprinkled mineral granulates.

The sheet may be a fiber sheet or paper, for example glass fiber dew, or any other base material for roofing felt to make shingles and roll roofing used in building construction.

Impregnating is defined as coating with an organic layer that may at least partially penetrate in the sheet below.

The organic layer may be bitumen, asphalt or tar, or other compositions of saturated, unsaturated and aromatic hydrocarbons used in building construction. Thus, bituminous product is defined as a product comprising bitumen or asphalt or tar, or other compositions of saturated, unsaturated and aromatic hydrocarbons used in building construction.

Sprinkling is defined as scattering in drops or particles the organic layer with granules by any means.

Mineral granulates or granules are natural or synthetic aggregate used to surface roofing material, such as roofing felt.

The mineral granulates to be sprinkled may be pigmented, i.e. a pigment may have been previously applied so as to change its coloration.

The mineral granulates to be sprinkled may also have been previously treated so as to be functionalized by other compounds. For example mineral granulates may have photocatalytic activity as being exposed to or coated with photocatalytic materials.

For example, a method of producing photocatalytic mineral granulates may comprise: depositing photocatalytic titanium dioxide nanoparticles on mineral granulates; and drying the mineral granulates.

Another method of producing photocatalytic mineral granulates may comprise: coating mineral granulates with pigments; depositing photocatalytic titanium dioxide nanoparticles on mineral granulates; drying the mineral granulates; wherein the depositing may occur before drying or after the drying step.

Coating the organic layer further comprises coating the impregnated sheet by depositing photocatalytic titanium dioxide nanoparticles onto the impregnated sheet.

Photocatalytic titanium dioxide nanoparticles are photocatalytic titanium dioxide particles having nanometers size and having photocatalytic properties.

The coating comprises depositing photocatalytic titanium dioxide nanoparticles onto the mineral granulates.

The depositing comprises spraying a dispersion comprising photocatalytic titanium dioxide nanoparticles onto the impregnated sheet.

The depositing comprises spraying a dispersion comprising photocatalytic titanium dioxide nanoparticles onto the mineral granulates.

In some embodiments the method further comprising:
- cooling the sheet; and rolling up the sheet.

Cooling of the sheet may be achieve by different means, for example by air-cooling. The coating of the impregnated sheet may occur during the cooling. The coating may also occur before the rolling up step. In some embodiments, the coating may occur after the sprinkling but before the cooling step.

The dispersion deposited or sprayed onto the impregnated sheet may be an aqueous dispersion.

The dispersion may comprises: a solvent, preferably water; one or more co-solvents, preferably alcohol, such as isopropanol up to 15 wt%, more preferably up to 10 wt%; photocatalytic titanium dioxide nanoparticles in the range between 15 wt% and 2.5 wt%, such as 10 wt% or 5 wt%; and means for keeping the dispersion stable, such as a dispersion agent.

The dispersion may further comprise a pH-stabilizing agent, such as alkaline; for example amines and/or ammonia.

The dispersion may further comprise a silica containing compounds in a range between up to 15 wt%, for example 10 wt% or 5 wt% or 2.5 wt% or 1.0 wt%. The dispersion may further comprise a wetting agent providing a good spreading of the dispersion on a substrate that is not hydrophilic.

The dispersion sprayed is a stable dispersion, i.e. nanoparticles remain in solution without precipitating.

The invention may provide a bituminous product comprising: a sheet, an organic layer deposited onto said sheet; an inorganic layer deposited onto the organic layer; wherein the inorganic layer comprises photocatalytic titanium dioxide nanoparticles.

The nanoparticles are located onto at least part of an external surface of the inorganic layer.

The nanoparticles may be chemically bond to at least part of an external surface of the inorganic layer.

In some embodiments of the bituminous product, the bituminous product is a roofing felt.

In some embodiments, the organic layer is bitumen. Thus, the deposition of the bitumen on the sheet results in a sheet impregnated of bitumen.

Roofing felt, felt paper or asphalt felt paper is a sheet material impregnated with bitumen or asphalt, similar to tar paper, used in building construction.

Roofing felt, also known as tar paper, is the base material used to make shingles and roll roofing.

The inorganic layer comprises mineral granulates.

Mineral granulates or granules provide long-lasting, weather-resistant protection of the roofing felt. Mineral granulates may be pigmented.

The photocatalytic titanium dioxide nanoparticles are particles located onto at least part of an external surface of the mineral granulates.

The mineral granulates are particles having a mineral core and an external surface in contact with the atmosphere. When deposited onto the mineral granulates the photocatalytic titanium dioxide nanoparticles are thus deposited onto the external surface of the mineral granulates.

In some further embodiments, the photocatalytic titanium dioxide nanoparticles are particles encircling the external surface of the mineral granulates.

Encircling is defined as surrounded or located around the all external surface area of the mineral granulates.

In some further embodiments, the photocatalytic titanium dioxide nanoparticles are particles surrounding a free external surface of the mineral granulates.

Free external surface is the surface of the granulates which is not in contact with, i.e. is not facing, the organic layer.

Thus surrounding a free external surface, means that photocatalytic titanium dioxide nanoparticles are located only on and around the free external surface.

In some further embodiments, the photocatalytic titanium dioxide nanoparticles are discrete particles.

Discrete, is defined as not included in a continuous matrix layer comprising other materials. Thus, discrete nanoparticles may be particles that are separated from each other. Discrete nanoparticles may also be nanoparticles connected to each other forming a porous network of nanoparticles that are not included within a matrix layer.

A matrix layer may be a layer comprising binders or other materials.

In some other embodiments, the photocatalytic titanium dioxide nanoparticles are chemically bond to the mineral granulates. For example, photocatalytic titanium dioxide nanoparticles may be chemically bond to the mineral granulates through an oxygen bond.

In some other embodiments, the inorganic layer is a continuous barrier layer.

A continuous barrier layer may be a layer of inorganic material that covers all the external or accessible surface of sheet impregnated with the organic layer.

The barrier layer may be a continuous layer, i.e. it is not formed by disconnect or isolated elements but it is uninterrupted.

The barrier layer or protective layer allows for the photocatalytic titanium dioxide nanoparticles to remain on the external surface of the layer once deposited and avoids the sinking or penetrating of the photocatalytic titanium dioxide nanoparticles into the organic layer.

In some other embodiments, the photocatalytic titanium dioxide nanoparticles are in an amount of 10 g/m²or less, such as 5 g/m² or less, preferably 3 g/m² or less, more preferably 2 g/m² or less, most preferably 1 g/m² or less.

In some embodiments the photocatalytic titanium dioxide nanoparticles dispersion applied to the inorganic layer is less than 200 ml/m², such as 150 ml/m², for example less than 100 ml/m². In some embodiments the photocatalytic titanium dioxide nanoparticles applied to the inorganic layer is 50 ml/m².

Thus the dispersion is applied to the inorganic layer in an amount of less than 200 ml/m², such as 150 ml/m², for example less than 100 ml/m².

As the photocatalytic titanium dioxide nanoparticles are distributed on the external surface through the method of the invention, low amount of photocatalytic titanium dioxide nanoparticles are sufficient in order to obtain the desired photocatalytic effect. Thus, high activity towards NOx degradation or algae reduction can be achieved through the use of low amounts of photocatalytic titanium dioxide nanoparticles.

For example, a product comprising a low amount of titanium dioxide per m², such as lower than 10 gr per m² for example 3-4 gr per m², provides a NOx degradation higher than 5%, for example up to 15%.

Thus, the bituminous product of the invention may have an activity towards NOx degradation higher then 2.5%, such as 5.0% or 7.5%, 10% or 15% (ISO 22197-1). The bituminous product may have an high activity towards algae reduction after several years and staining removal from bitumen staining during weathering.

In some other embodiments, the photocatalytic titanium dioxide nanoparticles have a primary size less than 50 nm, preferably less than 30 nm, more preferably less than 20 nm.

By using nano-sized titanium dioxide particles, the visual impression of the product remains essentially the same. In one embodiment, the photocatalytic titanium dioxide particles may have a primary size less than 100 nm.

Particle primary size, also called crystalline size is defined as the particle size of the particles in the dispersion thus when the particles are not agglomerated. Particle primary size may be in the area of 30 nm ± 10 nm.

In some embodiments the photocatalytic titanium dioxide particles may have a primary size in the range between 5 to 250 nm, preferably between 5 to 100 nm, more preferably between 5 to 50 nm, most preferably between 5 and 30 nm.

In some other embodiments the titanium dioxide particles may have an agglomerate size of less than 300 nm, less than 200 nm, less than 100 nm, such as less than 80 nm preferably an aggregate size of less than 60 nm such as of less than 40 nm and even more preferably an aggregate less than 30 nm such as less than 20 nm.

In some other embodiments, the photocatalytic titanium dioxide nanoparticles are in anatase phase.

For example, at least 80 % of the photocatalytic titanium dioxide nanoparticles deposited on and thus comprised in the bituminous product are in the anatase crystalline phase.

In some embodiments the photocatalytic titanium dioxide nanoparticles deposited on and thus comprised in the bituminous product are 100% in anatase phase.

In some further embodiments, the titanium dioxide nanoparticles may be in anatase phase doped with other chemical elements. For example, they may be doped with carbon. Doped anatase has the advantage of increasing the spectrum of light that can be used for photocatalytic reactions. For example, by carbon doping the anatase, light in the visible region can be used to trigger photocatalytic reaction on the titanium dioxide and thus on the product comprising the doped titanium dioxide.

The use of doped anatase and in particular carbon doped anatase may have also the advantage of efficiently reducing algae growth as algae growth often occurs on location with limited/diffused light, i.e. location where the UV component of the light is rather limited.

### BRIEF DESCRIPTION OF THE FIGURES

The method of producing bituminous product according to the invention will now be described in more detail with regard to the accompanying figures. The figures show one way of implementing the present invention and is not to be construed as being limiting to other possible embodiments falling within the scope of the attached claim set.
Figures 1A and figure 1B shows a schematic drawing of the bituminous product.
Figure 2 is a flow-chart of a method of producing bituminous product according to some embodiments of the invention.
Figure 3 is a schematic drawing of the steps of the method of producing bituminous product, according to some embodiments of the invention.
Figure 4 is a schematic drawing of the steps of the method of producing photocatalytic mineral granulates, according to some embodiments of the invention.
Figure 5 is a graph showing the activity towards NOx degradation as a function of time for a bituminous product.

### DETAILED DESCRIPTION OF AN EMBODIMENT

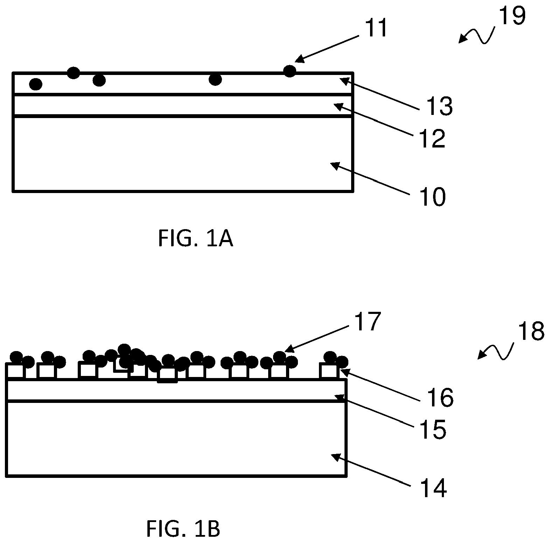

Figures 1A and figure 1B shows a schematic drawing of the bituminous product.

Figure 1A shows a bituminous product 19 comprising: a fiber sheet 10, a bitumen layer 12 deposited onto the fiber sheet 10 and an inorganic continuous layer, e.g. silicate layer 13 deposited onto the bitumen layer. The layer 13 comprises photocatalytic titanium dioxide nanoparticles 11.

Figure 1B shows a bituminous product 18 comprising: a fiber sheet 14, a bitumen layer 15 deposited onto the fiber sheet 14 and an inorganic layer comprising mineral granulates 16 deposited onto the bitumen layer 15. Photocatalytic titanium dioxide nanoparticles 17 are deposited and thus located onto the mineral granulates 16.

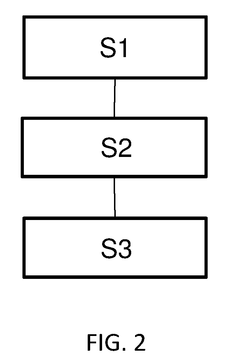

Figure 2 is a flow-chart of a method of producing bituminous product according to some embodiments of the invention.

The method of producing a photocatalytic bituminous product comprises:
- S1 impregnating a sheet with an organic layer;
- S2 sprinkling the organic layer with mineral granulates;
- S3 coating the impregnated sheet by depositing photocatalytic titanium dioxide nanoparticles onto the impregnated sheet, thereby depositing photocatalytic titanium dioxide nanoparticles onto the sprinkled mineral granulates.

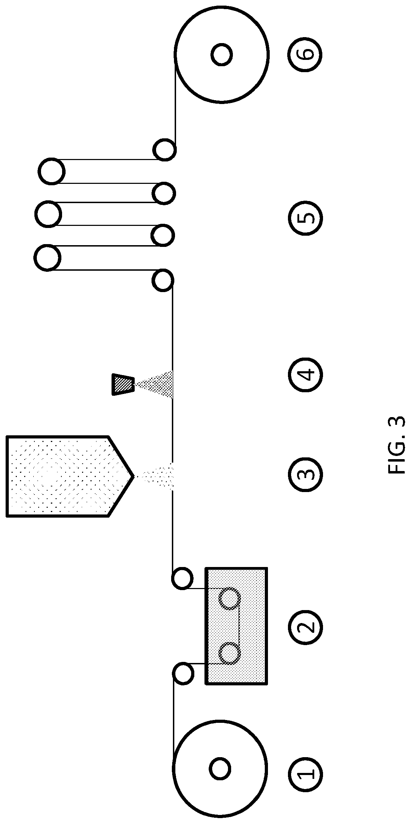

Figure 3 is a schematic drawing of the steps of the method of producing bituminous product.

The schematic drawing of figure 3 shows a fiber sheet in step 1 (e.g. glass fiber dew) which is coated, thus impregnated, with bitumen or asphalt during step 2. This step can be repeated several times to achieve optimal bitumen impregnation. Subsequently, mineral granules are sprinkled onto the wet bitumen surface that is around 100 degrees Celsius in step 3. The mineral granules are intended to protect the fiber sheet against the bad weather and light degradation. The mineral granules may be coloured for aesthetics purposes.

The granules are sprinkled on the impregnated fiber sheet in step 3, i.e., prior to the cooling in step 5.

The cooling can be achieved through vertical rolls.

Photocatalytic titanium dioxide nanoparticles are deposited after the deposition of the granules and before the rolling up step 6. For example, the photocatalytic titanium dioxide nanoparticles may be achieved by spraying an aqueous dispersion of titanium dioxide during step 4 before cooling step 5.

The deposition or coating by photocatalytic titanium dioxide nanoparticles can advantageously be done with hydraulic spray nozzles.

The advantage of this method is that most, if not all the titanium dioxide nanoparticles sprayed onto the granules are available for photocatalytic reactions, i.e. the nanoparticles have at least one surface available for photocatalytic reactions with the surrounding environment.

Other methods of coating granules with titanium dioxide particle have the disadvantage that a large number of the nanoparticles deposited do not have surfaces available for photocatalytic reactions. For example, the nanoparticles may be fully included in a matrix.

This method of coating thus allows high performance in terms of NOx degradation, prevention or reduction of formation of algae and self-cleaning with a limited amount of titanium dioxide per m².

For example, with a low amount of titanium dioxide per m², such as lower than 10 gr per m² for example 3-4 gr per m², provides a NOx degradation higher than 5%, for example up to 15%.

Activity towards NOx degradation can be also improved by spraying large quantity of liquid with a low content of titanium dioxide onto the impregnated sheet so as to increase the titanium dioxide concentration in the product.

Further additives may be added to improve the film formation and weather stability.

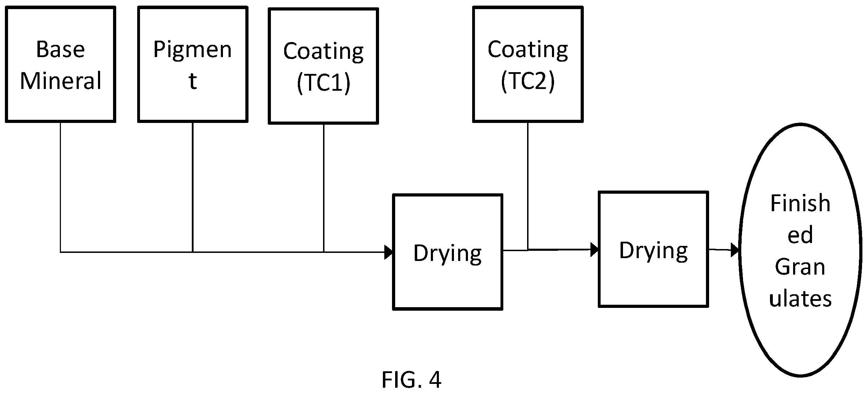

In some embodiments, the mineral granulates may be previously functionalized as shown in the schematic diagram of figure 4.

Before sprinkling as shown in step 3 of figure 3, the mineral granulates may be produced according to figure 4.

The base mineral granulates may be coated with a pigment, producing chromatic variation of the base mineral granulate colour. The pigmented mineral granulates may be coated with titanium dioxide nanoparticles either when are still wet from the pigments coating, i.e. in step TC1, or after the drying step in TC2.

In some embodiments, TC1 and TC2 may also be both applied so as to increase the titanium dioxide concentration.

The granules are than finally dried and thus care ready for being sprinkled onto the organic layer.

This method has the advantage that the titanium nanoparticles are not shadowed by the pigment particles or other binder particles. This means that a larger amount of nanoparticles have active sites or surfaces. The method allows manufacturing a bituminous product that has high activity towards NOx degradation despite low concentration of photocatalytic nanoparticles.

### Example 1

Bitumen roofing felts were used to test the photocatalytic performance of a spray applied bitumen roofing felts. Different amounts, 50-100 g/m², of photocatalytic dispersion (PD) was applied on each bitumen felt sample with a hydraulic nozzle system. The photocatalytic dispersion was a water based silicate-TiO₂ dispersion stabilized to pH 10-11 with an amine. Two different concentrations of TiO₂ was used (1x, i.e. a dispersion comprising 1.25 % of titanium dioxide nanoparticles and 2x, i.e. a dispersion comprising 2.5 % of titanium dioxide nanoparticles). The average particle size in the dispersions (measured by Volume with Nanotrac NPA 252) was measured to 27 nm. Less than 10 wt% of the solvent was isopropanol and the density was 1.04 g/ml. The PD was added 0.3 mL wetting agent per liter of PD. The five bitumen roofing felts were sprayed and left for ambient drying for 24 hours. After 24 hrs, the photocatalytic roofing felts were cut into 5x10 cm² pieces and analysed according to ISO 22197-1.

ISO 22197-1 test procedure: The NOx degrading performance of the sample was tested according to ISO 22197-1. The initial concentration of NO was 1.0 ppm and the flow of NO gas over the sample was 3 l/min. The concentrations of NO, NO₂ and NOx was analysed with a Horiba APNA NOx analyzer model 370. The test cell was purchased from an accredited institute. The light intensity was 1.0 mW/cm² UVA measured with a PMA 2110 UVA detector and the relative humidity was kept constant at 45% ±5 %. The sample sizes in the test were 49x99mm².

Four different samples were made: A - 50 g/m2 of PD and 1xTiO₂; B - 100 g/m² of PD and 1xTiO₂; C - 50 g/m2 of PD and 2xTiO₂; D- 100 g/m² of PD and 2xTiO₂.

**Table 1: NO degradation results after ISO 22197-1.**

| | 4x10cm² Roofing Felt | Visual |
|---|---|---|
| Sample A: % NO degradation after 24 hrs. amb. Drying | 7.6 % | +++ |
| Sample B: % NO degradation after 24 hrs. amb. Drying | 15.4 % | +++ |
| Sample C: % NO degradation after 24 hrs. amb. Drying | 22.6% | ++ |
| Sample D: % NO degradation after 24 hrs. amb. Drying | 34.5 % | + |

The data in Table 1 show that by increasing the loading of TiO₂ per m² of roofing felt the activity increases almost linear. However, by visual inspection B has a better visual appearance than sample C even though the total amount of TiO₂ is the same per m². This is even more pronounced when exposed to weathering.

### Example 2

Five commercial bitumen roofing felts were used to test the photocatalytic performance of a spray applied bitumen roofing felts. 100 g/m² of photocatalytic dispersion (PD) was applied on each bitumen roofing felt with a hydraulic nozzle system. The photocatalytic dispersion was a 7 wt% water based silicate-TiO₂ dispersion stabilized to pH 10-11 with an amine. The average particle size in the dispersions (measured by Volume with Nanotrac NPA 252) was measured to 27 nm. Less than 10 wt% of the solvent was isopropanol and the density was 1.04 g/ml. The PD was added 0.3 mL wetting agent per liter of PD. The five bitumen roofing felts were sprayed and left for ambient drying for 24 hours. After 24 hrs the photocatalytic roofing felts were cut into 5x10 cm² pieces and analysed according to ISO 22197-1.

**Table 2: NO degradation results after ISO 22197-1.**

| | 4x10cm² Roofing Felt |
|---|---|
| Sample 1: % NO degradation after 24 hrs. amb. drying | 2.4 % |
| Sample 2: % NO degradation after 24 hrs. amb. drying | 4.0 % |
| Sample 3: % NO degradation after 24 hrs. amb. drying | 8.4 % |
| Sample 4: % NO degradation after 24 hrs. amb. drying | 8.2 % |
| Sample 5: % NO degradation after 24 hrs. amb. drying | 3.1 % |

### Example 3:

After being analysed for NOx degrading properties the samples were inserted in an accelerated weathering chamber (QUV-Spray) following EN 1297:2004. EN 1297:2004 Test Procedure. The EN 1297:2004 test weathering procedure consists of a dry cycle followed by a wet spray cycle. The dry cycle is 300 min of 45 W/cm2 ± 5 w/cm² UVA (340 nm) and a chamber temperature of 60 °C (BST). The wet spray cycle is 60 min of spraying de-ionized water (max conductivity of 500 µS/m) at a flow rate of 10 ± 3 l/min/m² with an initial temperature of the water of 25 ± 5 °C. The test is continued by repeating step 4 and 5 for a predetermined number of hours. 300 hrs in EN1297:2004 is estimated to be 1 year outdoor exposures confirmed by compared EN1297:2004 data with real life data.

**Table 3: NO degradation results after ISO 22197-1.**

| | 4x10cm² Roofing Felt |
|---|---|
| Sample 1: % NO degradation after 300 hrs. EN1297:2004 | 10.8 % |
| Sample 2: % NO degradation after 300 hrs. EN1297:2004 | 8.4 % |
| Sample 3: % NO degradation after 170 hrs. EN1297:2004 | 14.8 %* |
| Sample 4: % NO degradation after 300 hrs. EN1297:2004 | Nat. ageing - Ex 4 |
| Sample 5: % NO degradation after 300 hrs. EN1297:2004 | 9.5 % |

| | |
|---|---|
| *170 hr in EN1297:2004 | |

### Example 4:

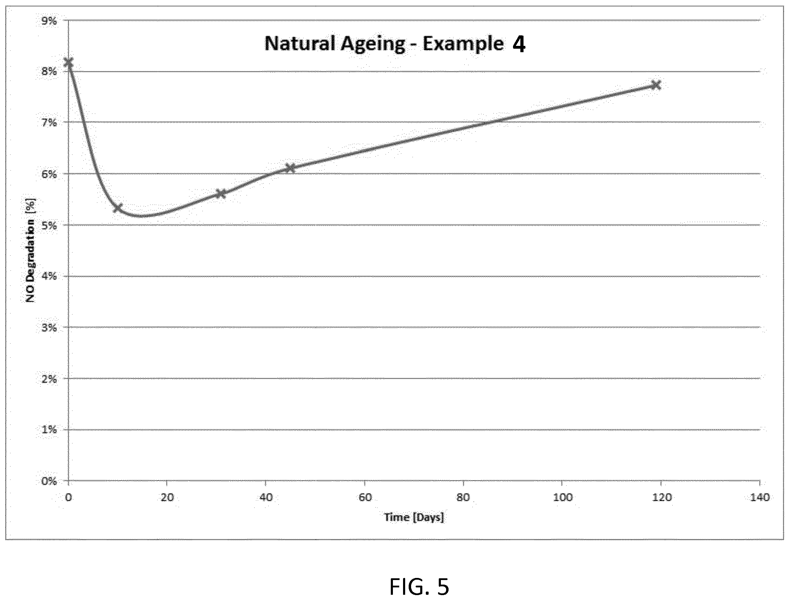

Sample 4 from Example 2 was used for natural weathering tests. A 5x10cm² sample was initially measured NOx degrading property, see Example 2, and then installed outside at an angle of 10 degree. At certain time intervals the sample was examined after ISO 22197-1 and afterwards put outside for further weathering data. The data is shown in Figure 5.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. In addition, the mentioning of references such as "a" or "an" etc. should not be construed as excluding a plurality. The use of reference signs in the claims with respect to elements indicated in the figures shall also not be construed as limiting the scope of the invention.

## Claims

1. A method of producing a photocatalytic bituminous product, said method comprising:
- impregnating a sheet with an organic layer;
- coating said organic layer with an inorganic layer,
wherein said coating comprises
- sprinkling said organic layer with mineral granulates, and thereafter
- further coating said organic layer with mineral granulates by depositing photocatalytic titanium dioxide nanoparticles onto said organic layer with mineral granulates thereby depositing photocatalytic titanium dioxide nanoparticles onto the sprinkled mineral granulates.

2. A method of producing a photocatalytic bituminous product according to claim 1, wherein said depositing comprises spraying a dispersion comprising photocatalytic titanium dioxide nanoparticles onto said organic layer with mineral granulates.

3. A method of producing a photocatalytic bituminous product according to any of the preceding claims, said method further comprising:
- cooling said sheet;
- rolling up said sheet.

4. A method of producing a photocatalytic bituminous product according to any of claims 2-3, wherein said dispersion is an aqueous dispersion.

5. A method of producing a photocatalytic bituminous product according to any of claims 2-4, wherein said dispersion comprises:
- a solvent, preferably water;
- one or more co-solvents, preferably alcohol, such as isopropanol up to 15 wt%, more preferably up to 10 wt%;
- photocatalytic titanium dioxide nanoparticles in the range between 15 wt% and 2.5 wt%, such as 10 wt% or 5wt%; and
- means for keeping the dispersion stable, such as a dispersion agent.

6. A method of producing a photocatalytic bituminous product according to any of claims 2-5, wherein said dispersion is applied to the inorganic layer in an amount of less than 200 ml/m², such as 150 ml/m², for example less than 100 ml/m².

## Patentansprüche

1. Verfahren zur Herstellung eines fotokatalytischen bituminösen Produkts, wobei das Verfahren umfasst:
- Imprägnieren einer Folie mit einer organischen Schicht;
- Beschichten der organischen Schicht mit einer anorganischen Schicht,
wobei das Beschichten umfasst
- Besprühen der organischen Schicht mit mineralischen Granulaten und danach
- weiteres Beschichten der organischen Schicht mit mineralischen Granulaten durch Abscheiden von fotokatalytischen Titandioxid-Nanopartikeln auf der organischen Schicht mit mineralischen Granulaten, wodurch fotokatalytische Titandioxid-Nanopartikel auf den gesprühten mineralischen Granulaten abgeschieden werden.

2. Verfahren zur Herstellung eines fotokatalytischen bituminösen Produkts nach Anspruch 1, wobei das Abscheiden Aufsprühen einer Dispersion umfasst, die fotokatalytische Titandioxid-Nanopartikel umfasst, auf die organische Schicht mit mineralischen Granulaten.

3. Verfahren zur Herstellung eines fotokatalytischen bituminösen Produkts nach einem der vorstehenden Ansprüche, wobei das Verfahren weiter umfasst:
- Abkühlen der Folie;
- Aufrollen des Folie.

4. Verfahren zur Herstellung eines fotokatalytischen bituminösen Produkts nach einem der Ansprüche 2 - 3, wobei die Dispersion eine wässrige Dispersion ist.

5. Verfahren zur Herstellung eines fotokatalytischen bituminösen Produkts nach einem der Ansprüche 2 - 4, wobei die Dispersion umfasst:
- ein Lösungsmittel, vorzugsweise Wasser;
- ein oder mehrere Co-Lösungsmittel, vorzugsweise Alkohol, wie etwa Isopropanol bis zu 15 Gew.-%, besonders bevorzugt bis zu 10 Gew.-%;
- fotokatalytische Titandioxid-Nanopartikel im Bereich zwischen 15 Gew.-% und 2,5 Gew.-%, wie etwa 10 Gew.-% oder 5 Gew.-%; und
- Mittel, um die Dispersion stabil zu halten, wie etwa ein Dispersionsmittel.

6. Verfahren zur Herstellung eines fotokatalytischen bituminösen Produkts nach einem der Ansprüche 2 - 5, wobei die Dispersion auf die anorganische Schicht in einer Menge von weniger als 200 ml/m², wie etwa 150 ml/m², beispielsweise weniger als 100 ml/m², aufgetragen wird.

## Revendications

1. Procédé pour produire un produit bitumineux photocatalytique, ledit procédé comprenant :
- l'imprégnation d'une feuille avec une couche organique ;
- le revêtement de ladite couche organique avec une couche inorganique,
dans lequel ledit revêtement comprend
- le saupoudrage de ladite couche organique avec des granulats minéraux, et ensuite
- le revêtement additionnel de ladite couche organique avec des granulats minéraux par dépôt de nanoparticules de dioxyde de titane photocatalytiques sur ladite couche organique avec des granulats minéraux, ce qui dépose des nanoparticules de nanoparticules de dioxyde de titane photocatalytiques sur les granulats minéraux déposés par saupoudrage.

2. Procédé pour produire un produit bitumineux photocatalytique selon la revendication 1, dans lequel ledit dépôt comprend la pulvérisation d'une dispersion comprenant des nanoparticules de dioxyde de titane photocatalytiques sur ladite couche organique avec des granulats minéraux.

3. Procédé pour produire un produit bitumineux photocatalytique selon l'une quelconque des revendications précédentes, ledit procédé comprenant en outre :
- le refroidissement de ladite feuille ;
- l'enroulement de ladite feuille.

4. Procédé pour produire un produit bitumineux photocatalytique selon l'une quelconque des revendications 2 - 3, dans lequel ladite dispersion est une dispersion aqueuse.

5. Procédé pour produire un produit bitumineux photocatalytique selon l'une quelconque des revendications 2 - 4, dans lequel ladite dispersion comprend :
- un solvant, de préférence de l'eau ;
- un ou plusieurs co-solvants, de préférence un alcool, tel que de l'isopropanol jusqu'à 15 % en poids, de façon plus particulièrement préférée jusqu'à 10 % en poids ;
- des nanoparticules de dioxyde de titane photocatalytiques dans la plage comprise entre 15 % en poids et 2,5 % en poids, comme 10 % en poids ou 5 % en poids ; et
- un moyen pour maintenir la dispersion stable, tel qu'un agent de dispersion.

6. Procédé pour produire un produit bitumineux photocatalytique selon l'une quelconque des revendications 2 - 5, dans laquelle ladite dispersion est appliquée sur la couche inorganique en une quantité inférieure à 200 ml/m², telle que 150 ml/m², par exemple inférieure à 100 ml/m².
